# EUROPEAN PATENT SPECIFICATION

(11) **EP 4 650 252 B1**
(45) Date of publication and mention of the grant of the patent: **02.12.2026**
(21) Application number: 25174816.6
(22) Date of filing: 07.05.2025
(51) Int. Cl.: B62D 25/08

(54) **FRAME MEMBER FOR VEHICLE**
RAHMENTEIL FÜR EIN FAHRZEUG
ÉLÉMENT DE CADRE POUR VÉHICULE

(30) Priority: 14.05.2024 JP 2024078782
(43) Date of publication of application: 19.11.2025
(73) Proprietor: MAZDA MOTOR CORPORATION, Hiroshima 730-8670 (JP)
(72) Inventor: Kuroki, Yui, Aki-gun, Hiroshima, 730-8670 (JP); Kanamaru, Daisuke, Aki-gun, Hiroshima, 730-8670 (JP); Taniguchi, Nobutaka, Aki-gun, Hiroshima, 730-8670 (JP)
(74) Representative: Lorenz Seidler Gossel Part. mbB

(56) References cited:
- WO-A1-2012/026028
- JP-A- 2008 284 931
- JP-A- 2015 199 405

## Description

### BACKGROUND OF THE INVENTION

The present invention relates to a frame member for a vehicle, and to a vehicle comprising such a frame member.

JP 2009-166697 A discloses a frame member for a vehicle which extends in a vehicle longitudinal direction and comprises an inner panel having a hat-shaped cross section perpendicular to an extension direction thereof which is open to an outward side, in a vehicle width direction, thereof and an outer panel having another hat-shaped cross section perpendicular to the extension direction which is open to an inward side, in the vehicle width direction, thereof, wherein respective upper-and-lower flanges of the inner panel and the outer panel are joined together in the vehicle width direction, thereby forming a close-cross section perpendicular to the extension direction of the frame member.

In the frame member for the vehicle of the above-described patent document, since the flanges are offset toward the outward side, in the vehicle width direction, thereof, the resistance against buckling of the outer panel is higher than that of the inner panel. Accordingly, when a collision load of the vehicle is applied from one side of the longitudinal direction, the inner panel tends to have the buckling easier than the outer panel. Consequently, when the collision load is applied, the frame member for the vehicle is not axially-compressed uniformly, so that the collision load cannot be absorbed expectedly. Document JP 2015 199405 A discloses the features of the preamble of claim 1.

### SUMMARY OF THE INVENTION

An object of the present invention is to provide a frame member for a vehicle which can properly absorb the collision load expectedly by its uniform axial compression when the collision load is applied.

The present invention is a frame member for a vehicle, comprising a frame body portion having an upper wall portion, a lower wall portion, and a pair of side wall portions, which together define a closed-cross section perpendicular to a longitudinal extension direction thereof, the closed-cross section having plural vertexes, a pair of groove portions formed at the pair of side wall portions, the groove portions being recessed toward an inside of the closed-cross section, and flanges protruding outward from the closed-cross section, wherein the closed-cross section, at least in a specified longitudinal range, is symmetrical about a point of center of gravity of the closed-cross section, including projection positions of the plural flanges, and is nonsymmetrical about all straight lines which pass through the center of gravity of the closed-cross section and are perpendicular to the longitudinal direction.

According to the present invention, since the closed-cross section of the frame member for the vehicle is symmetrical about the point of center of gravity of the closed-cross section, including projection positions of the plural flanges, even in a case where the projection positions of the flanges to attach attaching members of a suspension housing and the like are located unevenly in the vehicle width direction, a difference, in the vehicle width direction, of the buckling resistance of the frame member against the load applied in the longitudinal direction can be suppressed. Consequently, when the collision load is applied, the frame member for the vehicle can be axially-compressed stably, thereby absorbing the collision load expectedly. Further, compared to a case where no groove portion is provided, the moment of inertia (of area) of the frame member is made so large that the buckling resistance can be properly large. Accordingly, by configuring the frame member such that the closed-cross section, including the groove portions, is symmetrical about the point of center of gravity of the closed-cross section, both an increase of the buckling resistance and a stable axial compression can be attained for the frame member for the vehicle.

As described above, the present invention can provide the frame member for the vehicle which can properly absorb the collision load expectedly by its uniform axial compression when the collision load is applied.

The present invention will become apparent from the following description which refers to the accompanying drawings.

### BRIEF DESCRIPTION OF THE DRAWINGS

FIG. **1** is a plan view of a front vehicle-body structure provided with a frame member for a vehicle according to an embodiment of the present invention.
FIG. **2** is a side view of the front vehicle-body structure.
FIG. **3** is a perspective view of the frame member for the vehicle alone.
FIG. **4** is a sectional view schematically showing a cross section of the frame member for the vehicle taken along line IV-IV of FIG. **3****.**
FIG. **5** is a sectional view of the frame member for the vehicle taken along line V-V of FIG. **3****.**
FIG. **6** is a sectional view schematically showing the cross section of the frame member for the vehicle taken along line VI-VI of FIG. **3****.**
FIG. **7** is a partially-enlarged view of a surrounding area of a suspension housing of the front vehicle-body structure.
FIG. **8** is a partially-enlarged view of a connecting member to connect the frame member for the vehicle and a subframe, and its surrounding area.
FIG. **9** is a sectional view schematically showing a cross section of a first modification of the frame member for the vehicle.
FIG. **10** is a sectional view schematically showing a cross section of a second modification of the frame member for the vehicle.

### DETAILED DESCRIPTION OF THE INVENTION

Hereafter, embodiments of the present invention will be described referring to the accompanying drawings.

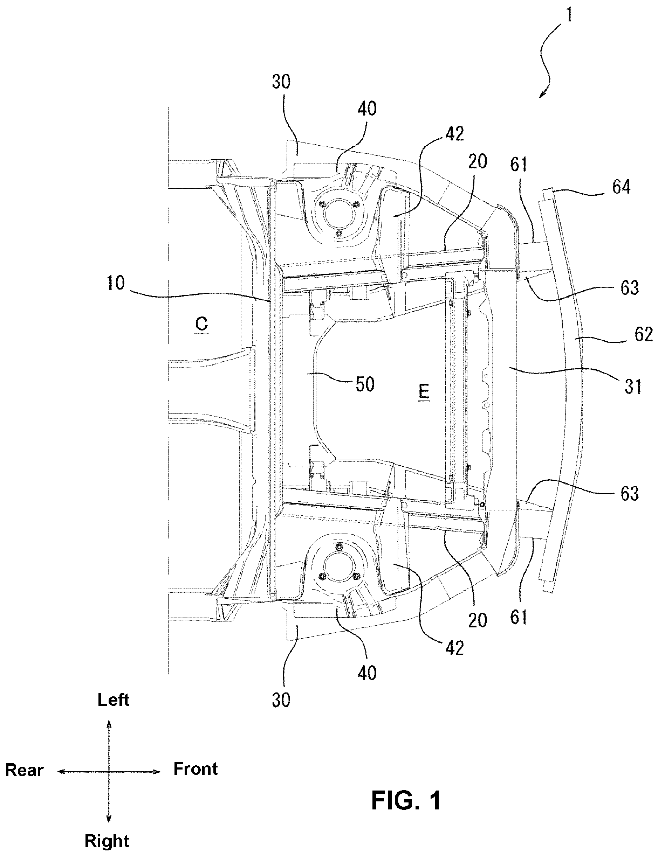

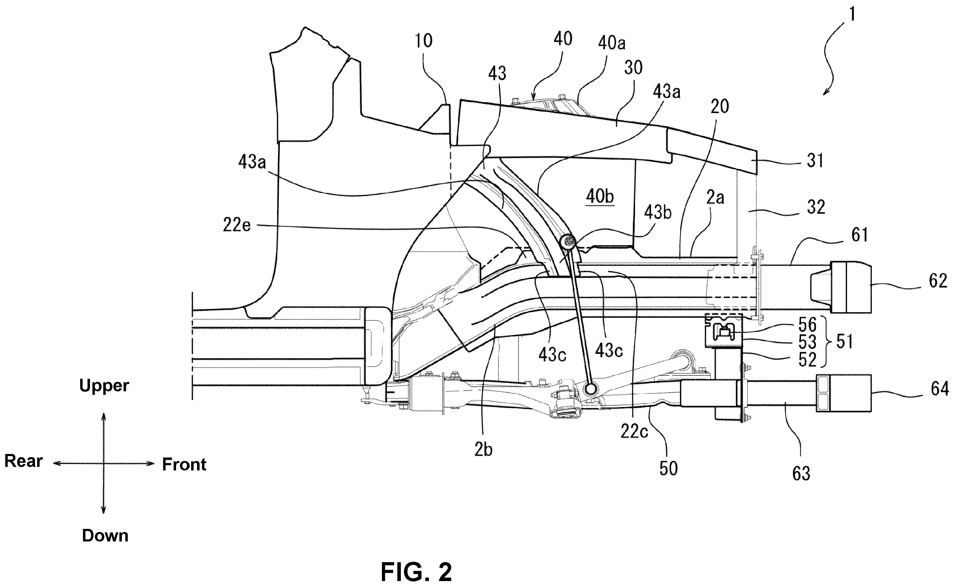

FIGS. **1** and **2** show a front vehicle-body structure **1** of a vehicle which is provided with a frame member according to an embodiment of the present invention. As shown in FIGS. **1** and **2****,** the front vehicle -body structure **1** comprises a dash panel **10** which partitions a cabin **C** from an engine room **E,** a pair of right-and-left front side frames **20** which extend forward from the dash panel **10,** and a pair of right-and-left apron reinforcements **30** which extend toward a front side of the dash panel **10** on an outward side, in a vehicle width direction, and above the front side frame **20.** The apron reinforcement **30** is connected to a shroud upper **31** extending in the vehicle width direction.

The front vehicle -body structure **1** further comprises a pair of right-and-left shroud members **32** which connect the shroud upper **31** and respective front ends of the front side frames **20** in a vertical direction, a pair of right-and-left suspension housings **40** which are arranged between the dash panel **10** and the shroud members **32,** a subframe **50** which is arranged below the front side frames **20,** and a pair of right-and-left connecting members **51** which connect the subframe **50** and the front side frames **20** in the vertical direction.

A main crash can **61,** which is made of a cylindrical member or the like to absorb a collision load applied from a vehicle forward side, extends forward at each front end of the front side frames **20.** A pair of right-and-left main crash cans **61** are interconnected by a bumper reinforcement **62** which extends in the vehicle width direction. A sub crash can **63,** which is made of another cylindrical member or the like to absorb the collision load applied from the vehicle forward side, extends forward at each front end of the subframe **50.** A pair of right-and-left sub crash cans **63** are interconnected by a sub bumper reinforcement **64** which extends in the vehicle width direction.

As shown in FIG. **2****,** the front side frame **20** includes a straight portion **2a** which forward extends roughly horizontally and an inclined portion **2b** which extends obliquely downward- and-reward from a rear end of the straight portion **2a.**

When the collision load is applied to the bumper reinforcement **62** from the vehicle forward side, the main crash can **61** and the front side frame **20** absorb part of the collision load and the rest of the collision load is dispersed to a rear-side vehicle-body frame.

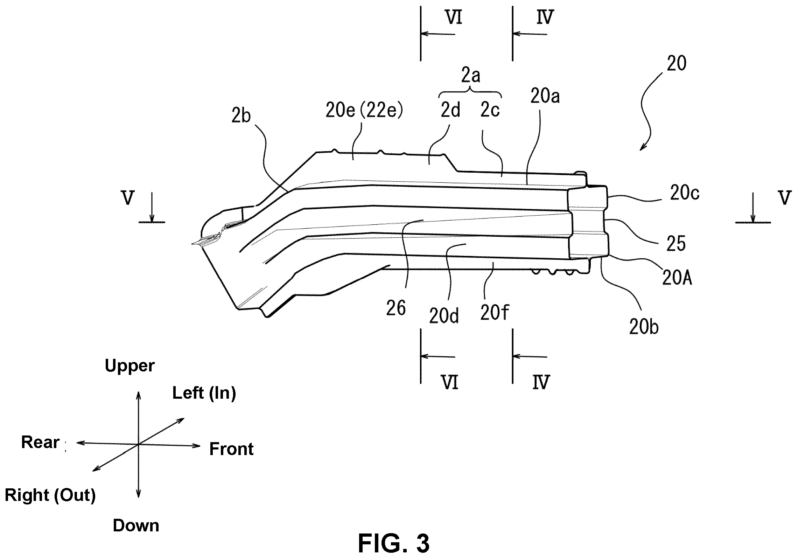

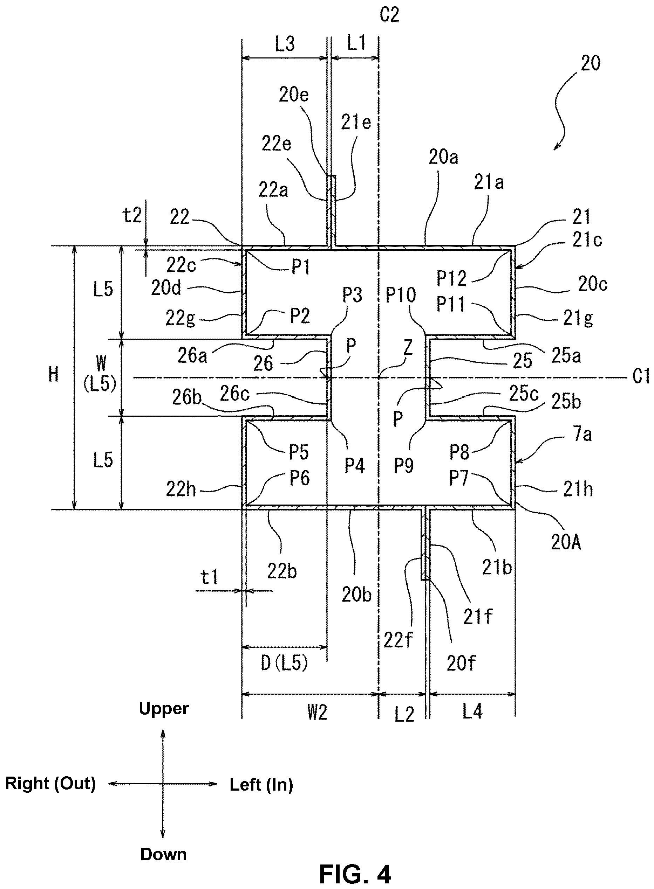

FIG. **3** is a perspective view of the front side frame **20** alone. FIG. **4** is a sectional view schematically showing a cross section (a cross section of a front-side portion **2c** of the straight portion **2a** of the front side frame **20**) taken along line IV-IV of FIG. **3****.** In the present embodiment, the right-and-left front side frames **20** has substantially a laterally-symmetrical structure. Accordingly, a structure of the right-side front side frame **20** will be described only.

Referring to FIGS. **3** and **4****,** the front side frame **20** is configured to absorb the collision load by its axial compression when the collision load is applied in the vehicle longitudinal direction. The front side frame **20** is made from iron, aluminum or the like, for example. The front side frame **20** comprises an upper wall portion **20a,** a lower wall portion, and a pair of side wall portions **20c, 20d,** so that it includes plural vertexes and a frame body portion **20A** which has a closed-cross section **7a** perpendicular to its extension direction. The front side frame **20** is provided with groove portions **25, 26** which are recessed toward an inside of the closed-cross section **7a** at the respective side wall potions **20c, 20d.** The groove portions **25, 26** extend in the longitudinal direction. The front side frame **20** has an upper flange **20e** and a lower flange **20f,** which respectively protrude outward (in the vertical direction in the present embodiment) from the closed-cross section **7a.**

As shown in FIG. **4****,** the front side frame **20** is formed by welding plural sheets of plate member, for example. In the present embodiment, the front side frame **20** comprises an inner panel **21** positioned on the inward side, in the vehicle width direction, thereof and an outer panel **22** positioned on the outward side, in the vehicle width direction, thereof.

The inner panel **21** comprises an inner upper-wall portion **21a** extending in the vehicle width direction, an inner lower-wall portion **21b** extending in the vehicle width direction, facing the inner upper-wall portion **21a,** an inside wall portion **21c** interconnecting respective inner ends of the inner upper-wall portion **21a** and the inner lower-wall portion **21b,** and upper-and-lower flanges **21e, 21f** which extend in the vertical direction from respective outer ends of the inner upper-wall portion **21a** and the inner lower-wall **21b.** Its cross section perpendicular to the extension direction is of a hat shape protruding inward in the vehicle width direction.

The outer panel **22** comprises an outer upper-wall portion **22a** extending in the vehicle width direction, an outer lower-wall portion **22b** extending in the vehicle width direction, facing the outer upper-wall portion **22a,** an outside wall portion **22c** interconnecting respective outer ends of the outer upper-wall portion **22a** and the outer lower-wall portion **22b,** and upper-and-lower flanges **22e, 22f** which extend in the vertical direction from respective inner ends of the outer upper-wall portion **22a** and the outer lower-wall **22b.** Its cross section perpendicular to the extension direction is of another hat shape protruding outward in the vehicle width direction.

The upper flanges **21e, 22e** and the lower flanges **21f, 22f** of the inner panel **21** and the outer panel **22** are joined together in the vehicle width direction by welding, for example, so that the front side frame **20** with the roughly-rectangular closed-cross section **7a** is formed.

The upper wall portion **20a,** the lower wall portion **20b,** and the pair of side wall portions **20c, 20d** of the front side frame **20** are formed by the upper-wall portions **21a, 22a,** the lower wall portions **21b, 22b,** and the side wall portions **21c, 22c** of the inner panel **21** and the outer panel **22.** The upper flange **20e** and the lower flange **20f** of the front side frame **20** are respectively formed by the upper flanges **21e, 22e** and the lower flanges **21f, 22f** of the inner panel **21** and the outer panel **22.**

A projection position of the upper flange **20e** relative to the closed-cross section **7a** is located on either one side of an outward side and an inward side of center of gravity (figure) **Z** of the closed-cross section **7a,** and a projection position of the lower flange **20f** relative to the closed-cross section **7a** is located on the other side. In the present embodiment, the upper flange **20e** is positioned on the outward side, in the vehicle width direction, of the lower flange **20f.** Respective distances L1, L2 of the upper flange **20e** and the lower flange **20f,** in the vehicle width direction, from the center of gravity **Z** of the closed-cross section **7a** match each other substantially. In this specification, the meaning of the above-described expression: "substantially" includes a tolerance which may be generated unavoidably in manufacturing the inner panel **21** and the outer panel **22.**

In this specification, the center of gravity **Z** of the closed-cross section **7a** means an intersection of a straight line C1 which passes through the center, in the vertical direction, between the upper wall portion **20a** and the lower wall portion **20b** and a straight line C2 which passes through the center, in the vehicle width direction, between the pair of side wall portions **20c, 20d** in a cross section of a specified area of the front side frame **20** shown in FIG. **4****.** In the present embodiment, the specified area is the front-side portion **2c** of the straight portion **2a** of the front side frame **20.**

Groove portions **25, 26,** which are recessed toward an inside of the closed-cross section **7a** and extend in the vehicle longitudinal direction, are formed at the respective side wall portions **21c, 22c** of the inner panel **21** and the outer panel **22.**

As shown in FIG. **4****,** the groove portions **25, 26** are arranged at a facing position, in the vehicle width direction, thereof. In the present embodiment, the width W, in the vertical direction, of each of the groove portions **25, 26** is set at 1/3 of the height H of the closed-cross section **7a.** A center **P,** in the vertical direction, of the width W of the groove portions **25, 26** matches the straight line C 1, and the groove portions **25, 26** are located at the center, in the vertical direction, of the closed-cross section **7a.**

In the present embodiment, the depth D of the groove portions **25, 26** substantially matches the width W of the groove portions **25, 26.** The depth D of the groove portions **25, 26** is set to be smaller than the distance W2, in the vehicle width direction, between the side wall portions **20c, 20d** and the center of gravity **Z.** The groove portions **25, 26** are positioned on the outward side of the straight line C2 which extends in the vertical direction, passing through the center of gravity D. The depth D of the groove portions **25, 26** substantially matches the width L3, L4 of the outer upper-wall portion **22a** and the inner lower-wall portion **21b.**

The groove portions **25, 26** comprise groove-upper wall portions **25a, 26a** which are located at an upper side and extend in the vehicle width direction at the closed-cross section **7a,** groove-lower wall portions **25b, 26b** which are located at a lower side and extend in the vehicle width direction, facing the groove-upper wall portions **25a, 26a,** and groove-bottom wall portions **25c, 26c** which interconnect respective inner ends of the groove-upper wall portions **25a, 26a** and the groove-lower wall portions **25b, 26b** in the vertical direction.

Referring to FIG. **4****,** the side wall portion **21c** of the inner panel **21** and the side wall portion **22c** of the outer panel **22** are configured to have substantially the same bending rigidity. Specifically, the respective side wall portions **21c, 22c** of the inner panel **21** and the outer panel **22** are made of plural side wall portions having substantially the same bending rigidity, so that the respective bending rigidities of the above-described plural side wall portions are substantially the same. In the present embodiment, the above-described bending rigidity means the one for a direction perpendicular to each face of the respective side wall portions (i.e., a thickness direction of each of the side wall portions).

The plural side wall portions comprise upper side wall portions **21g, 22g** located above the respective groove portions **25, 26,** lower side wall portions **21h, 22h** located below the groove portions **25, 26,** groove-upper wall portions **25a, 26a,** groove-lower wall portions **25b, 26b,** and groove-bottom wall portions **25c, 26c,** which are provided at the respective side wall portions **21c, 22c** of the inner panel **21** and the outer panel **22.** The plural side wall portions are configured to have substantially the same plate thickness **t1** and substantially the same side length **L5** of the closed-cross section **7a.** Further, the respective upper-wall portions **22a, 21a** of the inner panel **21** and the outer panel **22** are configured to have substantially the same plate thickness **t2** and substantially the same side lengths **L4, L3 as** those of the respective side wall portions.

As shown in FIG. **4****,** the closed-cross section **7a** has plural vertexes **P1 - P12** (first - twelfth vertexes). The first vertex **P1** is an intersection of the outer upper-wall portion **22a** and the upper side wall portion **22g.** The second vertex **P2** is an intersection of the upper side wall portion **22g** and the groove-upper wall portion **26a.** The third vertex **P3** is an intersection of the groove-upper wall portion **26a** and the groove-bottom wall portion **26c.** The fourth vertex **P4** is an intersection of the groove-bottom wall portion **26c** and the groove-lower wall portion **26b.** The fight vertex **P5** is an intersection of the groove-lower wall portion **26b** and the lower side wall portion **22h.** The sixth vertex **P6** is an intersection of the lower side wall portion **22h** and the outer lower wall portion **22b.** The seventh vertex **P7** is an intersection of the inner lower-wall portion **21b** and the lower side wall portion **21h.** The eighth vertex **P8** is an intersection of the lower side wall portion **21h** and the groove-lower wall portion **25b.** The sixth vertex **P9** is an intersection of the groove-lower wall portion **25b** and the groove-bottom wall portion **25c.** The tenth vertex **P10** is an intersection of the groove-bottom wall portion **25c** and the groove-upper wall portion **25a.** The eleventh vertex **P11** is an intersection of the groove-upper wall portion **25a** and the upper side wall portion **21g.** The twelfth vertex **P12** is an intersection of the upper side wall portion **21g** and the inner upper-wall portion **21a.**

The closed-cross section **7a** is symmetrical about a point of its center of gravity **Z,** including protrusion positions of the upper-and-lower flanges **20e, 20f** and unsymmetrical about all lines which pass through the center of gravity **Z** and are perpendicular to the longitudinal direction. The above-described expression: "be symmetrical about a point of its center of gravity **Z"** means that in a case where the closed-cross section **7a** is rotated by 180 degrees around the center of gravity **Z,** the first - sixth vertexes **P1 - P6** and the protrusion position of the upper flange **20e** substantially matches the seventh - twelfth vertexes **P7 - P12** and the protrusion position of the lower flange **20f,** respectively.

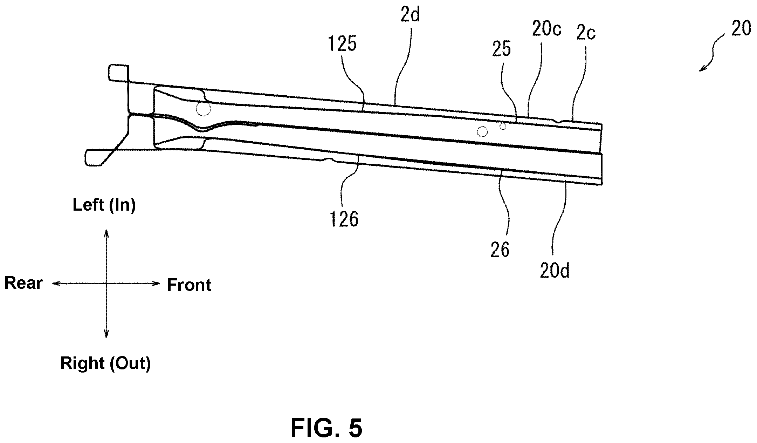

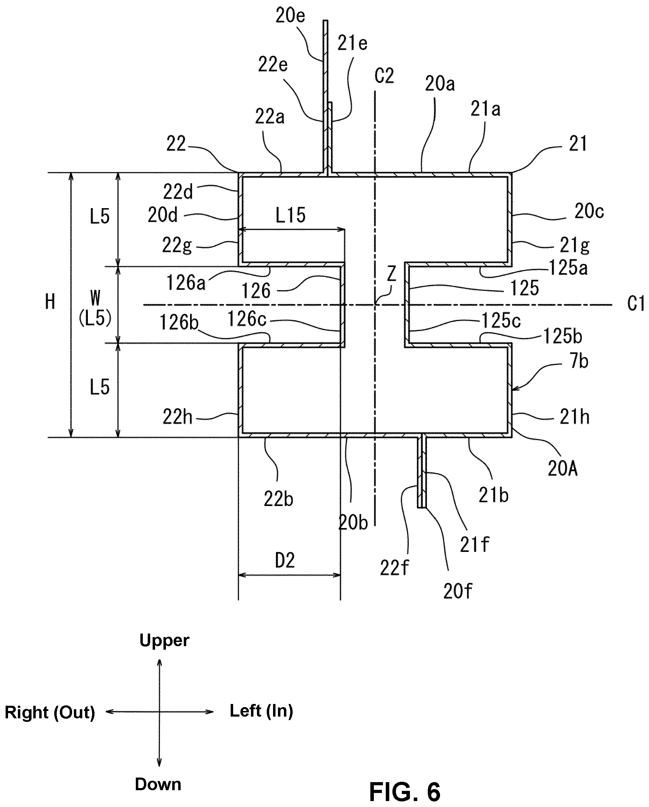

Referring to FIGS. **5** and **6****,** the depth of the groove portions **25, 26** are configured such that that of the rear-side groove portions is deeper than that of the front-side groove portions. More specifically, the depth **D2** of groove portions **125, 126** of a closed-cross section **7b** which is positioned at a rear-side portion **2d** of the front side frame **20** shown in FIG. **6** is deeper than that of the groove portions **25, 26** of the closed-cross section **7a** which is positioned at the front-side portion **2c** of the front side frame **20** shown in FIG. **4****.** The side length **L15** of groove-upper wall portions **125a, 126a** of the closed-cross section **7b** is longer than the side length **L15** of groove-bottom wall portions **125c, 126c,** the upper side wall portions **21g, 22g,** and the lower side wall portion **21h, 22h** of the closed-cross section **7b.**

As shown in FIGS. **3****,** **4** and **5****,** the upper flange **20e** of the rear-side portion **2d** of the front side frame **20** protrudes upward from the upper flange **20e** of the front-side portion **2c.** More specifically, the upper flange **22e** of the outer panel **22** is configured such that the rear-side portion **2d** is longer than the front-side portion **2c.**

Herein, in the present embodiment, as shown in FIG. **2****,** the front-side portion **2c** of the front side frame **20** is a portion of the straight portion **2a** which is positioned on the forward side of the suspension housing **40,** and the rear-side portion **2d** is another portion of the straight portion **2a** where the suspension housing **40** is attached.

As shown in FIGS. **1****,** **2** and **7****,** the suspension housing **40** is attached to the front side frame **20.** The suspension housing **40** supports an upper end of a front suspension (not illustrated) which is arranged at an appropriate position located in front of the dash panel **10.** The suspension housing **40** is provided to extend between the apron reinforcement **30** and the front side frame **20.**

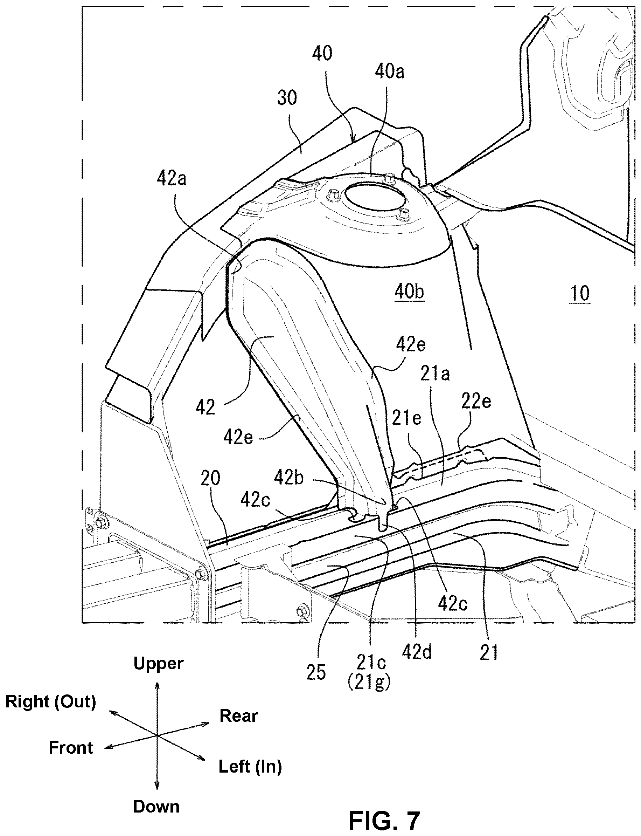

As shown in FIG. 7, the suspension housing **40** is a roughly-cone shaped cylindrical member with a disc-shaped upper face. The suspension housing **40** comprises a roughly disc-shaped suspension-top support portion **40a** to support the suspension and a tower portion **40b** which expands downward from the suspension-top support portion **40a.** The suspension-top support portion **40a** is fixed to an upper face portion of the apron reinforcement **30** by welding or the like.

The tower portion **40b** is configured to extend downward from an outside end portion, in a radial direction, of the suspension-top support portion **40a.** An upper end portion of the tower portion **40b** is fixed to a lower end portion of the suspension support portion **40a** and an inside face of the apron reinforcement **30** by welding or the like. A lower end portion of the tower portion **40b** is fixed to the upper flange **22e** of the outer panel **22** of the front side frame **20** by welding or the like in a state where it overlaps the upper flange **22e** from the outward side, in the vehicle width direction, thereof.

The suspension housing **40,** which has a roughly hat-shaped cross section open to the outward side, in the vehicle width direction, thereof, is arranged adjacently to a front side of the tower portion **40b,** and has a first reinforcing member **42** extending in the vertical direction. An upper end portion **42a** of the first reinforcing member **42** is joined to the front side portion of the tower portion **40b** which is fixed to an inside face of the apron reinforcement **30** by welding or the like. A lower end portion **42b** of the first reinforcing member **42** is fixed to the inner upper-wall portion **21a** and the inner side-wall portion **21c** of the inner panel **21** by welding or the like. The lower end portion **42b** of the first reinforcing member **42** is provided with an upper-face fixation potion **42c** which is fixed to the inner upper-wall portion **21a** and a side-face fixation portion **42d** which is fixed to the inner side-wall portion **21c.** A pair of flange portions **42e** of the first reinforcing member **42** which extend in the longitudinal direction are joined to a front face side of the tower portion **40b** by welding or the like.

As shown in FIG. **2****,** the suspension housing **40** comprises a second reinforcing member **43** which is arranged on the outward side, in the vehicle width direction, of the tower portion **40b.** The second reinforcing member **43** is of a roughly hat shape and extends in the vertical direction. A pair of flange portions **43a** of the second reinforcing member **43** which extend in the longitudinal direction are joined to the tower portion **40b** from the outward side, in the vehicle width direction, thereof by welding or the like. The pair of flange portions 43a are joined to the upper flange **22e** of the outer panel **22** by welding or the like at a lower end portion **43b** of the second reinforcing member **43.** At the lower end portion **43b** of the second reinforcing member **43** is provided a side-face fixation portion **43c** which is joined to the outer side-wall portion **22c** by welding or the like.

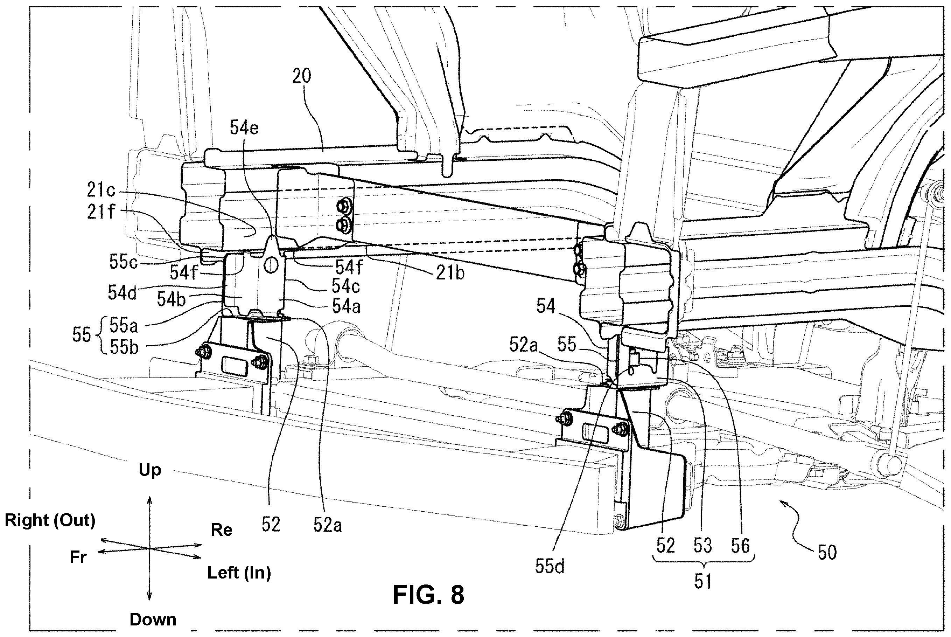

As shown in FIGS. **2** and **8****,** the subframe **50** and the front side frame **20** are connected by the connecting member **51.** The connecting member **51** comprises a lower-side connecting member **52** which is positioned below that and connected to the subframe **50,** an upper-side connecting member **53** which is positioned above that and connected to the front side frame **20,** and a fastening member **56** which fastens the lower-side connecting member **52** and the upper-side connecting member **53.**

The lower-side connecting member **52** has a roughly U-shaped cross section open to the forward side and extends in the vertical direction. The lower-side connecting member **52** is fixed to the subframe **50** by welding or the like at its lower end portion. A plate member **52a** to arrange a fastening member **54** is joined to an upper end portion of the lower-side connecting member **52.**

The upper-side connecting member **53** comprises a pole member **54** which has a roughly U-shaped cross section open to the outward side, in the vehicle width direction, thereof and an L-shaped plate member **55** which covers an outward-and-lower side of the pole member **54.**

The pole member **54** comprises an inner wall **54a** which extends in the vertical direction, a front wall **54b** and a rear wall **54c** which extend outward, the width direction, thereof from a front edge and a rear edge of the inner wall **54a,** and a pair of front-and-rear flanges **54d** which respectively extend forward and rearward from the front wall **54b** and an outer edge of the rear wall **54c.**

The plate member **55** includes a vertical wall **55a** extending in the vertical direction and a bottom wall **55b** extending inward in the vehicle width direction, thereof from a lower end of the vertical wall **55a.** The upper-side connecting member **53** is formed in a hollow-box shape by the pair of flange portions **54d** of the pole member **54** and the vertical wall **55a** of the plate member **55** which are joined together in the width direction by welding or the like.

At the pole member **54** are provided a side-face fixation portion **54e** which extends upward from the inner wall **54a** and is fixed to the side wall portion **21c** of the inner panel **21** and a lower-face fixation portion **54f** which respectively extend forward and rearward from the front wall **54b** and an upper edge of the rear wall **54c** and is fixed to the lower wall portion **21b** of the inner panel **21.** The plate member **55** is joined to the lower flange **21f** of the inner panel **21** at the upper end portion **55c** by welding or the like.

The fastening member **56** is a weld nut and a bolt or the like which are fixed to a tongue-side portion **55d.** The tongue-side portion **55d** is made of part of a vertical wall of the plate member **55** which has been cut off and bent inward, in the vehicle width direction, thereof. The upper-side connecting member **51** and the lower-side connecting member **52** are joined together by inserting the bolt from a position below the plate member **52** and screwing the bolt into the weld nut.

The effects of the frame member **20** for the vehicle according to the above-described embodiment will be described.

The front side member **20** extending in the longitudinal direction comprises the frame body portion **20A** having the closed-cross section **7a** perpendicular to the extension direction, the closed-cross section **7a** having the plural vertexes **P1 - P12,** a pair of groove portions **25, 26** formed at a pair of side wall portions **20c, 20d** which form the closed-cross section **7a** of the frame body portion **20A,** the groove portions **25, 26** being recessed toward the inside of the closed-cross section **7a,** and the plural flanges **20e, 20f** protruding outward from the closed-cross section **7a,** wherein the closed-cross section **7a** is symmetrical about the point of center of gravity **Z** of the closed-cross section **7a,** including the projection positions of the plural flanges **20e, 20f,** and is nonsymmetrical about all straight lines which pass through the center of gravity **Z** of the closed-cross section **7a** and are perpendicular to the longitudinal direction.

According to the present embodiment, since the closed-cross section **7a** of the front side frame **20** is symmetrical about the point of center of gravity **Z** of the closed-cross section **7a,** including protrusion positions of the flanges **20e, 20f,** even in a case where the projection positions of the flanges **20e, 20f** are located unevenly in the vehicle width direction, a difference, in the vehicle width direction, of the buckling resistance of the front side frame **20** against the load applied in the longitudinal direction can be suppressed. Consequently, when the collision load is applied, the front side frame **20** can be axially-compressed stably, thereby absorbing the collision load expectedly. Further, compared to a case where no groove portion is provided, the moment of inertia (of area) of the front side frame **20** is made so large that the buckling resistance can be properly large. Accordingly, by configuring the front side frame **20** such that the closed-cross section **7a,** including the groove portions **25, 26,** is symmetrical about the point of center of gravity **Z** of the closed-cross section **7a,** both an increase of the buckling resistance and a stable axial compression can be attained for the front side frame **20.**

The frame member for the vehicle is a pair of front side frames **20** positioned on the both-side portions, in the vehicle width direction, of the engine room **E.**

According to this structure, when the collision load is applied from the vehicle forward side, the front side frame **20** can be stably axially-compressed.

The groove portions **25, 26** are provided to face each other in the vehicle width direction.

According to this structure, compared to a case where the vertical positions of the groove portions **25, 26** are different from each other, the difference, in the vertical direction, of the bending rigidity of the front side frame **20** is so suppressed that the front side frame **20** can be axially-compressed uniformly.

The groove portions **25, 26** comprise the groove-upper wall portions **25a, 26a** extending inward at their upper sides, the groove-lower wall portions **25b, 26b** extending inward at their lower sides and facing the groove-upper wall portions **25a, 26a,** and the groove-bottom wall portions **25c, 26c** interconnecting the respective inner ends of the groove-upper wall portions **25a, 26a** and the groove-lower wall portions **25b, 26b** in the vertical direction, and the groove-upper wall portions **25a, 26a,** the groove-lower wall portions **25b, 26b,** and the groove-bottom wall portions **25c, 26c** are configured to have the same side length of the closed-cross section **7a.**

According to this structure, compared to a case where the respective groove-wall portions **25a, 26a, 25b, 26b, 25c, 26c** of the groove portions **25, 26** have the different side length, the difference of the bending rigidity among the respective groove-wall portions **25a, 26a, 25b, 26b, 25c, 26c** of the groove portions **25, 26** is so suppressed that the front side frame **20** can be axially-compressed stably.

The groove portions **25, 26** are configured such that their vehicle rearward-located portions are deeper than their vehicle forward-located portions.

According to this structure, the rear-side portion (vehicle rearward-located portion) **2d** of the front side frame **20** has the higher rigidity than the front-side portion (vehicle forward-located portion) **2c.** Accordingly, the front-side portion **2c** can absorb the collision load through its deformation when receiving the collision load applied from the vehicle forward side, and also can receive the collision load properly at the rear-side portion **2d** having the high rigidity in order to secure the performance of the collision-load absorption by means of the front-side portion **2d.**

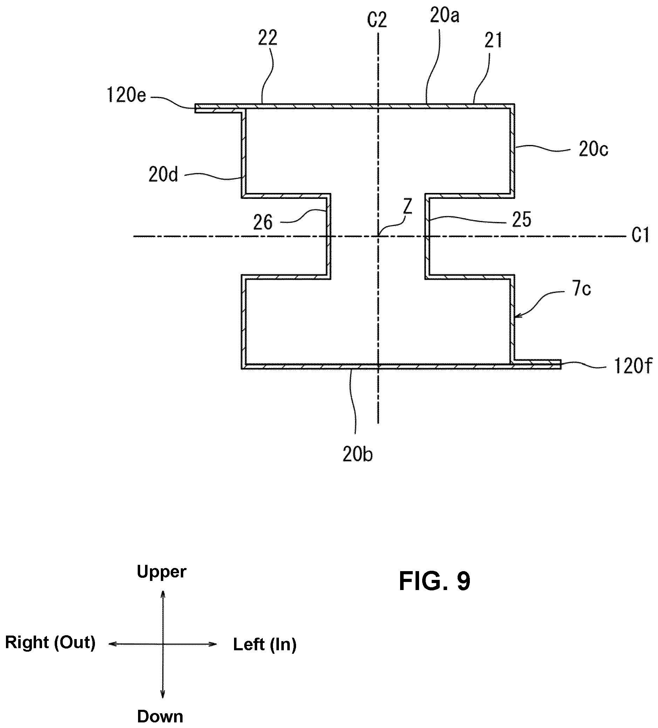

While the above-described embodiment is configured such that the flanges **20e, 20f** extend in the vertical direction from the closed-cross section **7a,** the present invention is not limited to this. The flanges **120e, 120f** may extend in the width direction from the closed-cross section **7c** as shown in FIG. **9****,** for example.

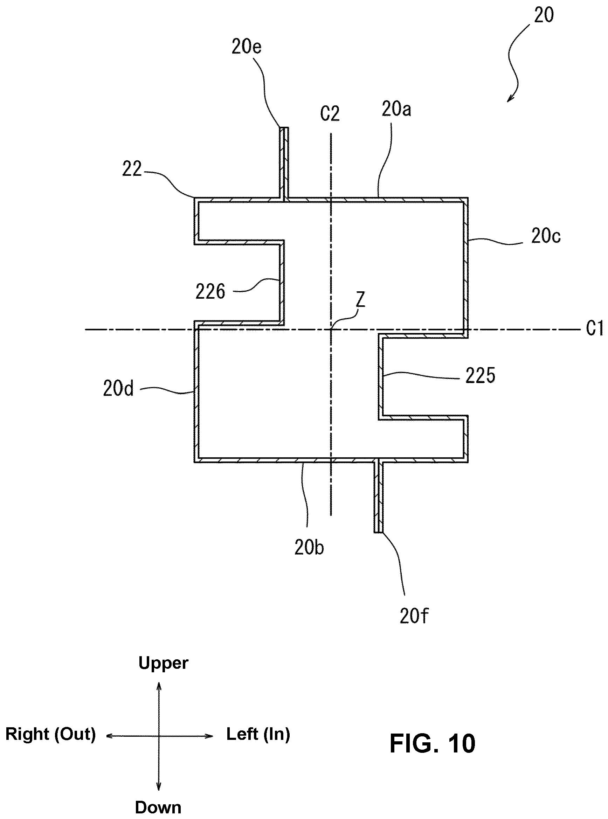

Further, while the longitudinal positions of the groove portions **25, 26** match each other in the present embodiment, the present invention is not limited to this as long as the groove portions **25, 26** are symmetrical about the point of the center of gravity **Z.** For example, as shown in FIG. **10****,** the vertical positions of the groove portions **225, 226** may be offset from each other.

Moreover, the above-described shows the structure in which the frame member comprises the inner panel **21** and the outer panel **22,** this frame member may be an extruded aluminum member or the like.

## Claims

1. A frame member for a vehicle, comprising:
a frame body portion (20A) having an upper wall portion (20a), a lower wall portion (20b), and a pair of side wall portions (20c, 20d), which together define a closed-cross section (7a) perpendicular to a longitudinal extension direction thereof, the closed-cross section having plural vertexes;
a pair of groove portions (25, 26) formed at the pair of side wall portions (20c, 20d), the groove portions (25, 26) being recessed toward an inside of the closed-cross section (7a);
and
flanges (20e, 20f) protruding outward from the closed-cross section (7a),
wherein said closed-cross section (7a), at least in a specified longitudinal range, is symmetrical about a point of center of gravity (Z) of said closed-cross section (7a), including projection positions of said plural flanges (20e, 20f), **characterized in that** said closed-cross section (7a) is nonsymmetrical about all straight lines which pass through said center of gravity (Z) of the closed-cross section (7a) and are perpendicular to the longitudinal direction.

2. The frame member of claim 1, wherein the frame body portion (20A) is formed from an inner panel (21) and an outer panel (22), wherein the inner panel (21) forms one of the side wall portions (20c) and further comprises an inner upper-wall portion (21a) and an inner lower-wall portion (21b), wherein the outer panel (22) forms the other one of the side wall portions (20d) and further comprises an outer upper-wall portion (22a) and an outer lower-wall portion (22b), wherein the inner and outer panels (21, 22) are connected, preferably welded, together at the flanges (20e, 20f), wherein inner upper-wall portion (21a) and the outer upper-wall portion (22a) together form an upper wall portion (20a) of the closed cross-section (7a), and wherein inner lower-wall portion (21b) and the outer lower-wall portion (22b) together form an lower wall portion (20b) of the closed cross-section (7a).

3. The frame member of any one of the preceding claims, wherein the flanges (20e, 20f) protrude from the upper and lower wall portions (20a, 20b) of the closed cross-section (7a), preferably in a vertical direction of the frame body portion (20A).

4. The frame member of any one of the preceding claims, wherein a projection position of an upper flange (20e) relative to the closed-cross section (7a) is located on either one side of an outward side and an inward side of center of gravity (Z), and a projection position of the lower flange (20f) relative to the closed-cross section (7a) is located on the other side of center of gravity (Z), wherein preferably the projection position of the upper flange (20e) is on the outward side and the projection position of the lower flange (20f) is on the inward side.

5. The frame member of any one of the preceding claims, wherein said groove portions (25, 26) are arranged such as to face each other in a width direction, perpendicular to the longitudinal direction, and are preferably symmetrical about straight lines (C1, C2) which pass through said center of gravity (Z) of the closed-cross section (7a) in vertical and horizontal directions of the frame body portion (20A) and are perpendicular to the longitudinal direction.

6. The frame member of any one of the preceding claims, wherein each of said groove portions (25, 26) comprises a groove-upper wall portion (25a, 26a) extending inward at an upper side thereof, a groove-lower wall portion (25a, 26a) extending inward at a lower side thereof and facing said groove-upper wall portion (25a, 26a), and a groove-bottom wall portion (25c, 26c) interconnecting respective inner ends of said groove-upper wall portion (25a, 26a) and said groove-lower wall portion (25b, 26b) in a vertical direction.

7. The frame member of any one of the preceding claims, wherein each of said groove portions (25, 26) has a rectangular shape with said groove-upper wall portion (25a, 26a) and said groove-lower wall portion (25b, 26b) being parallel to each other and with said groove-bottom wall portion (25c, 26c) being perpendicular to said groove-upper wall portion (25a, 26a) and said groove-lower wall portion (25b, 26b).

8. The frame member of any one of the preceding claims, wherein and said groove-upper wall portion (25a, 26a), said groove-lower wall portion (25b, 26b), and said groove-bottom wall portion (25c, 26c) are configured to have the same side length.

9. The frame member of any one of the preceding claims, wherein a width (W), in a vertical direction, of each of the groove portions 25, 26 is approximately 1/3 of the height (H) of the closed-cross section (7a).

10. The frame member of any one of the preceding claims, wherein at least one of said groove portions (25, 26) is configured such that its depth increases in the longitudinal direction.

11. A vehicle comprising a frame member (20A) according to any one of the preceding claims.

12. The vehicle of claim 11, wherein the longitudinal direction of the frame member (20A) is a front-rear direction of the vehicle, wherein a vertical direction of the frame member (20A) is an vertical direction of the vehicle, and wherein a horizontal direction of the frame member (20A) is a width direction of the vehicle.

13. The vehicle of claim 12, wherein the vehicle comprises two frame members (20A) according to any one of claim 1-10 forming a pair of front side frames (20) positioned on both-side portions, in the vehicle width direction, of an engine room (E).

14. The vehicle of claim 13, wherein suspension housings (40) are attached to the front side frames (20).

15. The vehicle of any one of claims 11-14, wherein at least one of said groove portions (25, 26) is configured such that its depth increases in the longitudinal direction such that a vehicle rearward-located portion thereof is deeper than a vehicle forward-located portion thereof.

## Patentansprüche

1. Rahmenelement für ein Fahrzeug, umfassend:
einen Rahmenkörperabschnitt (20A), der einen Oberwandabschnitt (20a), einen Unterwandabschnitt (20b) und ein Paar von Seitenwandabschnitten (20c, 20d) aufweist, die zusammen einen geschlossenen Querschnitt (7a) senkrecht zu einer Längserstreckungsrichtung davon definieren, wobei der geschlossene Querschnitt mehrere Scheitelpunkte aufweist;
ein Paar von Nutabschnitten (25, 26), die an dem Paar von Seitenwandabschnitten (20c, 20d) ausgebildet sind, wobei die Nutabschnitte (25, 26) zu einer Innenseite des geschlossenen Querschnitts (7a) hin vertieft sind; und
Flansche (20e, 20f), die von dem geschlossenen Querschnitt (7a) nach außen vorstehen,
wobei der besagte geschlossene Querschnitt (7a), mindestens in einem bestimmten Längsbereich, symmetrisch um einen Schwerpunktpunkt (Z) des besagten geschlossenen Querschnitts (7a) ist, einschließlich Vorsprungspositionen der besagten mehreren Flansche (20e, 20f), **dadurch gekennzeichnet, dass** der besagte geschlossene Querschnitt (7a) bezüglich aller geraden Linien nichtsymmetrisch ist, die durch den besagten Schwerpunkt (Z) des geschlossenen Querschnitts (7a) verlaufen und senkrecht zu der Längsrichtung sind.

2. Rahmenelement nach Anspruch 1, wobei der Rahmenkörperabschnitt (20A) aus einem inneren Paneel (21) und einem äußeren Paneel (22) gebildet ist, wobei das innere Paneel (21) einen der Seitenwandabschnitte (20c) bildet und ferner einen inneren Oberwandabschnitt (21a) und einen inneren Unterwandabschnitt (21b) umfasst, wobei das äußere Paneel (22) den anderen der Seitenwandabschnitte (20d) bildet und ferner einen äußeren Oberwandabschnitt (22a) und einen äußeren Unterwandabschnitt (22b) umfasst, wobei das innere und das äußere Paneel (21, 22) an den Flanschen (20e, 20f) miteinander verbunden, vorzugsweise geschweißt, sind, wobei der innere Oberwandabschnitt (21a) und der äußere Oberwandabschnitt (22a) zusammen einen Oberwandabschnitt (20a) des geschlossenen Querschnitts (7a) bilden, und wobei der innere Unterwandabschnitt (21b) und der äußere Unterwandabschnitt (22b) zusammen einen Unterwandabschnitt (20b) des geschlossenen Querschnitts (7a) bilden.

3. Rahmenelement nach einem der vorhergehenden Ansprüche, wobei die Flansche (20e, 20f) von dem Oberwandabschnitt und dem Unterwandabschnitt (20a, 20b) des geschlossenen Querschnitts (7a) vorstehen, vorzugsweise in einer vertikalen Richtung des Rahmenkörperabschnitts (20A).

4. Rahmenelement nach einem der vorhergehenden Ansprüche, wobei eine Vorsprungsposition eines oberen Flansches (20e) relativ zu dem geschlossenen Querschnitt (7a) auf einer von einer Auswärtsseite und einer Einwärtsseite des Schwerpunkts (Z) angeordnet ist, und eine Vorsprungsposition des unteren Flansches (20f) relativ zu dem geschlossenen Querschnitt (7a) auf der anderen Seite des Schwerpunkts (Z) angeordnet ist, wobei vorzugsweise die Vorsprungsposition des oberen Flansches (20e) auf der Auswärtsseite liegt und die Vorsprungsposition des unteren Flansches (20f) auf der Einwärtsseite liegt.

5. Rahmenelement nach einem der vorhergehenden Ansprüche, wobei die besagten Nutabschnitte (25, 26) so angeordnet sind, dass sie einander in einer Breitenrichtung, senkrecht zu der Längsrichtung, gegenüberliegen, und vorzugsweise symmetrisch bezüglich gerader Linien (C1, C2) sind, die durch den besagten Schwerpunkt (Z) des geschlossenen Querschnitts (7a) in vertikaler und horizontaler Richtung des Rahmenkörperabschnitts (20A) verlaufen und senkrecht zu der Längsrichtung sind.

6. Rahmenelement nach einem der vorhergehenden Ansprüche, wobei jeder der besagten Nutabschnitte (25, 26) einen Nut-Oberwandabschnitt (25a, 26a), der sich an einer Oberseite davon einwärts erstreckt, einen Nut-Unterwandabschnitt (25a, 26a), der sich an einer Unterseite davon einwärts erstreckt und dem besagten Nut-Oberwandabschnitt (25a, 26a) gegenüberliegt, und einen Nut-Bodenwandabschnitt (25c, 26c), der jeweilige innere Enden des besagten Nut-Oberwandabschnitts (25a, 26a) und des besagten Nut-Unterwandabschnitts (25b, 26b) in einer vertikalen Richtung miteinander verbindet, umfasst.

7. Rahmenelement nach einem der vorhergehenden Ansprüche, wobei jeder der besagten Nutabschnitte (25, 26) eine rechteckige Form aufweist, wobei der besagte Nut-Oberwandabschnitt (25a, 26a) und der besagte Nut-Unterwandabschnitt (25b, 26b) parallel zueinander sind und wobei der besagte Nut-Bodenwandabschnitt (25c, 26c) senkrecht zu dem besagten Nut-Oberwandabschnitt (25a, 26a) und dem besagten Nut-Unterwandabschnitt (25b, 26b) ist.

8. Rahmenelement nach einem der vorhergehenden Ansprüche, wobei und der besagte Nut-Oberwandabschnitt (25a, 26a), der besagte Nut-Unterwandabschnitt (25b, 26b) und der besagte Nut-Bodenwandabschnitt (25c, 26c) so konfiguriert sind, dass sie die gleiche Seitenlänge aufweisen.

9. Rahmenelement nach einem der vorhergehenden Ansprüche, wobei eine Breite (W), in einer vertikalen Richtung, von jedem der Nutabschnitte 25, 26 ungefähr 1/3 der Höhe (H) des geschlossenen Querschnitts (7a) beträgt.

10. Rahmenelement nach einem der vorhergehenden Ansprüche, wobei mindestens einer der besagten Nutabschnitte (25, 26) so konfiguriert ist, dass seine Tiefe in der Längsrichtung zunimmt.

11. Fahrzeug, umfassend ein Rahmenelement (20A) nach einem der vorhergehenden Ansprüche.

12. Fahrzeug nach Anspruch 11, wobei die Längsrichtung des Rahmenelements (20A) eine Vorne-Hinten-Richtung des Fahrzeugs ist, wobei eine vertikale Richtung des Rahmenelements (20A) eine vertikale Richtung des Fahrzeugs ist, und wobei eine horizontale Richtung des Rahmenelements (20A) eine Breitenrichtung des Fahrzeugs ist.

13. Fahrzeug nach Anspruch 12, wobei das Fahrzeug zwei Rahmenelemente (20A) nach einem der Ansprüche 1-10 umfasst, die ein Paar von vorderen Seitenrahmen (20) bilden, die an beidseitigen Abschnitten, in der Fahrzeugbreitenrichtung, eines Motorraums (E) positioniert sind.

14. Fahrzeug nach Anspruch 13, wobei Radaufhängungsgehäuse (40) an den vorderen Seitenrahmen (20) angebracht sind.

15. Fahrzeug nach einem der Ansprüche 11-14, wobei mindestens einer der besagten Nutabschnitte (25, 26) so konfiguriert ist, dass seine Tiefe in der Längsrichtung derart zunimmt, dass ein fahrzeugbezogen hinten befindlicher Abschnitt davon tiefer ist als ein fahrzeugbezogen vorne befindlicher Abschnitt davon.

## Revendications

1. Élément de cadre pour un véhicule, comprenant :
une partie de corps de cadre (20A) présentant une partie de paroi supérieure (20a), une partie de paroi inférieure (20b) et une paire de parties de paroi latérale (20c, 20d), qui définissent ensemble une section transversale fermée (7a) perpendiculaire à une direction d'extension longitudinale de celle-ci, la section transversale fermée présentant plusieurs sommets ;
une paire de parties de rainure (25, 26) formées au niveau de la paire de parties de paroi latérale (20c, 20d), les parties de rainure (25, 26) étant évidées vers un intérieur de la section transversale fermée (7a) ; et
des brides (20e, 20f) faisant saillie vers l'extérieur depuis la section transversale fermée (7a),
dans lequel ladite section transversale fermée (7a), au moins dans une plage longitudinale spécifiée, est symétrique par rapport à un point de centre de gravité (Z) de ladite section transversale fermée (7a), y compris des positions de saillie desdites plusieurs brides (20e, 20f), **caractérisé en ce que** ladite section transversale fermée (7a) est non symétrique par rapport à toutes les lignes droites qui passent par ledit centre de gravité (Z) de la section transversale fermée (7a) et sont perpendiculaires à la direction longitudinale.

2. Élément de cadre selon la revendication 1, dans lequel la partie de corps de cadre (20A) est formée à partir d'un panneau intérieur (21) et d'un panneau extérieur (22), dans lequel le panneau intérieur (21) forme l'une des parties de paroi latérale (20c) et comprend en outre une partie de paroi supérieure intérieure (21a) et une partie de paroi inférieure intérieure (21b), dans lequel le panneau extérieur (22) forme l'autre des parties de paroi latérale (20d) et comprend en outre une partie de paroi supérieure extérieure (22a) et une partie de paroi inférieure extérieure (22b), dans lequel les panneaux intérieur et extérieur (21, 22) sont reliés, de préférence soudés, ensemble au niveau des brides (20e, 20f), dans lequel la partie de paroi supérieure intérieure (21a) et la partie de paroi supérieure extérieure (22a) forment ensemble une partie de paroi supérieure (20a) de la section transversale fermée (7a), et dans lequel la partie de paroi inférieure intérieure (21b) et la partie de paroi inférieure extérieure (22b) forment ensemble une partie de paroi inférieure (20b) de la section transversale fermée (7a).

3. Élément de cadre selon l'une quelconque des revendications précédentes, dans lequel les brides (20e, 20f) font saillie depuis les parties de paroi supérieure et inférieure (20a, 20b) de la section transversale fermée (7a), de préférence dans une direction verticale de la partie de corps de cadre (20A).

4. Élément de cadre selon l'une quelconque des revendications précédentes, dans lequel une position de saillie d'une bride supérieure (20e) par rapport à la section transversale fermée (7a) est située sur l'un ou l'autre côté parmi un côté extérieur et un côté intérieur du centre de gravité (Z), et une position de saillie de la bride inférieure (20f) par rapport à la section transversale fermée (7a) est située sur l'autre côté du centre de gravité (Z), dans lequel de préférence la position de saillie de la bride supérieure (20e) est sur le côté extérieur et la position de saillie de la bride inférieure (20f) est sur le côté intérieur.

5. Élément de cadre selon l'une quelconque des revendications précédentes, dans lequel lesdites parties de rainure (25, 26) sont agencées de manière à se faire face dans une direction de la largeur, perpendiculaire à la direction longitudinale, et sont de préférence symétriques par rapport à des lignes droites (C1, C2) qui passent par ledit centre de gravité (Z) de la section transversale fermée (7a) dans des directions verticale et horizontale de la partie de corps de cadre (20A) et sont perpendiculaires à la direction longitudinale.

6. Élément de cadre selon l'une quelconque des revendications précédentes, dans lequel chacune desdites parties de rainure (25, 26) comprend une partie de paroi supérieure de rainure (25a, 26a) s'étendant vers l'intérieur au niveau d'un côté supérieur de celle-ci, une partie de paroi inférieure de rainure (25a, 26a) s'étendant vers l'intérieur au niveau d'un côté inférieur de celle-ci et faisant face à ladite partie de paroi supérieure de rainure (25a, 26a), et une partie de paroi de fond de rainure (25c, 26c) reliant entre elles des extrémités intérieures respectives de ladite partie de paroi supérieure de rainure (25a, 26a) et de ladite partie de paroi inférieure de rainure (25b, 26b) dans une direction verticale.

7. Élément de cadre selon l'une quelconque des revendications précédentes, dans lequel chacune desdites parties de rainure (25, 26) présente une forme rectangulaire avec ladite partie de paroi supérieure de rainure (25a, 26a) et ladite partie de paroi inférieure de rainure (25b, 26b) qui sont parallèles entre elles et avec ladite partie de paroi de fond de rainure (25c, 26c) qui est perpendiculaire à ladite partie de paroi supérieure de rainure (25a, 26a) et à ladite partie de paroi inférieure de rainure (25b, 26b).

8. Élément de cadre selon l'une quelconque des revendications précédentes, dans lequel et ladite partie de paroi supérieure de rainure (25a, 26a), ladite partie de paroi inférieure de rainure (25b, 26b) et ladite partie de paroi de fond de rainure (25c, 26c) sont configurées pour avoir la même longueur de côté.

9. Élément de cadre selon l'une quelconque des revendications précédentes, dans lequel une largeur (W), dans une direction verticale, de chacune des parties de rainure 25, 26 est d'environ 1/3 de la hauteur (H) de la section transversale fermée (7a).

10. Élément de cadre selon l'une quelconque des revendications précédentes, dans lequel au moins l'une desdites parties de rainure (25, 26) est configurée de telle sorte que sa profondeur augmente dans la direction longitudinale.

11. Véhicule comprenant un élément de cadre (20A) selon l'une quelconque des revendications précédentes.

12. Véhicule selon la revendication 11, dans lequel la direction longitudinale de l'élément de cadre (20A) est une direction avant-arrière du véhicule, dans lequel une direction verticale de l'élément de cadre (20A) est une direction verticale du véhicule, et dans lequel une direction horizontale de l'élément de cadre (20A) est une direction de la largeur du véhicule.

13. Véhicule selon la revendication 12, dans lequel le véhicule comprend deux éléments de cadre (20A) selon l'une quelconque des revendications 1-10 formant une paire de cadres latéraux avant (20) positionnés sur des portions des deux côtés, dans la direction de la largeur du véhicule, d'un compartiment moteur (E).

14. Véhicule selon la revendication 13, dans lequel des logements de suspension (40) sont fixés aux cadres latéraux avant (20).

15. Véhicule selon l'une quelconque des revendications 11-14, dans lequel au moins l'une desdites parties de rainure (25, 26) est configurée de telle sorte que sa profondeur augmente dans la direction longitudinale de telle sorte qu'une portion de celle-ci située vers l'arrière du véhicule est plus profonde qu'une portion de celle-ci située vers l'avant du véhicule.
